# EUROPEAN PATENT SPECIFICATION

(11) **EP 1 878 888 B1**
(45) Date of publication and mention of the grant of the patent: **27.01.2010**
(21) Application number: 06253637.0
(22) Date of filing: 12.07.2006
(51) Int. Cl.: F01N 3/20, B01D 53/94

(54) **Fluid dosing device**
Fluiddosiervorrichtung
Dispositif de dosage de fluide

(43) Date of publication of application: 16.01.2008
(73) Proprietor: Delphi Technologies, Inc., Troy, Michigan 48007 (US)
(72) Inventor: Cooke, Michael, Gillingham Kent ME7 1DR (GB)
(74) Representative: Gregory, John David Charles

(56) References cited:
- EP-A- 1 022 048
- DE-U1-202005 001 257

## Description

This invention relates to a device for dosing a gas flow with a fluid. In particular, the invention relates to a device for effecting optimum dispersion and mixing of a reagent in a flow of exhaust gases in order to reduce harmful exhaust gas emissions.

It is well known that exhaust gases from internal combustion engines contain substances which are harmful to the environment and which can pose a threat to public health. For many years, a sustained effort has been made within the automotive industry to reduce the release to the atmosphere of harmful substances carried in exhaust gases, both by modifying the combustion process itself to give a reduced yield of harmful combustion products, and by treating the exhaust gases before their emission into the atmosphere, for example by providing a catalyst to induce chemical breakdown of the harmful constituents into benign compounds.

One class of harmful exhaust gas constituents comprises the oxides of nitrogen, with the generic chemical formula NOₓ, where x typically ranges from 0.5 to 2.5. Nitrogen oxides contribute to the formation of ground-level ozone, nitrate particles and nitrogen dioxide, all of which can cause respiratory problems. Furthermore, nitrogen oxides can lead to the formation of acid rain, and nitrous oxide (N₂O) in particular is a greenhouse gas and contributes to the destruction of the ozone layer. It is therefore desirable to reduce the emission of nitrogen oxides into the atmosphere, and new vehicles must comply with increasingly stringent limits on the acceptable levels of NO*ₓ* emissions.

In certain circumstances, NO*ₓ* emissions can be reduced by conventional exhaust gas catalysis, for example in a three-way catalyst comprising immobilised powders of platinum, palladium and rhodium. However, in diesel or lean-bum petrol combustion engines, a high concentration of oxygen is present in the exhaust gas, and this oxygen inhibits the catalysed breakdown of the nitrogen oxides in conventional systems. Consequently, a need has arisen for an alternative strategy to limit NO*ₓ* emissions.

One strategy, known as selective catalytic reduction or SCR, involves the introduction of a reagent comprising a reducing agent, typically a liquid ammonia source such as a urea solution, into the exhaust gas flow. The reducing agent is injected into the exhaust gas upstream of an exhaust gas catalyst, known as an SCR catalyst, typically comprising a mixture of catalyst powders such as titanium oxide, vanadium oxide and tungsten oxide immobilised on a ceramic honeycomb structure. Nitrogen oxides in the exhaust gas undergo a catalysed reduction reaction with the ammonia source on the SCR catalyst, forming gaseous nitrogen and water. An example of such a system is described in International Patent Application No. WO 2004/111401 A.

Preferably, the rate at which reducing agent is supplied to the exhaust flow should be a function of the speed of the engine. For example, at high engine speeds, exhaust gases will be produced in greater quantities and the velocity of the exhaust gases will be higher than at low engine speeds. The exhaust gas velocity may vary from a few metres per second at idling speeds up to hundreds of metres per second at full load. Sufficient reducing agent must be supplied to the exhaust flow at all times in order to maintain the necessary reduction in NOₓ emissions. To achieve this, the dosing rate of the reducing agent is often controlled by an engine control unit, which determines the dosing quantity, duration and rate in response to signals from sensors which monitor several parameters including engine speed, exhaust gas oxygen content and exhaust gas temperature. By optimising the supply of reagent in this way, the concentration of nitrogen oxides in the emitted exhaust gas can be reduced by 90% or more.

To maximise the efficiency of the reduction reaction, and hence obtain the optimum reduction in NOₓ emissions, the reducing agent must be introduced into the exhaust gas flow in such a way that the reducing agent becomes atomised and dispersed evenly throughout the exhaust gas flow before reaching the SCR catalyst. This ensures that the reducing agent mixes thoroughly with the exhaust gas, so that the reduction reaction components are in close proximity when they impinge upon the catalyst. Good dispersion must be achieved under all operating conditions, irrespective of the velocity of the exhaust gases and the dosing rate of the reducing agent. To achieve atomisation and dispersion, the reagent must carry sufficient energy upon release into the exhaust gas flow. To provide sufficient energy to the reagent, the velocity of the injection spray should scale linearly with the velocity of the exhaust gas. In other words, the upper and lower bounds of the range of velocities of the injection spray should vary in the same ratio as the upper and lower bounds of the range of velocities of the exhaust gas.

One means of providing an atomised, dispersed spray of liquid comprises a spray nozzle having one or more outlets shaped to atomise liquid pumped at high pressure into the nozzle. However, to be capable of providing a spray having a range of output velocities with upper and lower bounds in the required ratio, the pressure of liquid required to achieve the highest spray velocity would be of the order of 1000 times the pressure required to achieve the lowest spray velocity. Because a minimum supply pressure of around 2 to 3 bar is required to achieve atomisation using such a nozzle, the supply pressure required to achieve the highest spray velocity would be extremely high. Although such a system would be efficient in use, because energy need only be imparted to a small volume of reagent in order to disperse it within the exhaust gas, the cost of implementing an extremely high-pressure system in a mass-production vehicle would be prohibitive.

An alternative solution, described in German Patent Publication No. DE 100 60 808 A, utilises a vaned screen positioned in an exhaust pipe upstream of a point where reducing agent is injected in an atomised spray. The screen induces turbulence in the exhaust gases to assist in dispersing and mixing the reducing agent throughout the exhaust gas flow. However, this arrangement is inefficient because a large amount of energy must be imparted to a large volume of exhaust gas in order to create sufficient movement to effect dispersion of a very small quantity of reducing agent. The exhaust gases experience a back-pressure upstream of the vaned screen, which acts against and reduces the flow of exhaust gases from the cylinders of the engine after combustion, with the consequence that engine efficiency is reduced.

Against this background, it would be desirable to provide an alternative means for introducing a reagent into an exhaust gas flow which alleviates or overcomes the abovementioned difficulties.

According to the present invention, there is provided a fluid dosing device for dispensing fluid into a gas flow, the device comprising a nozzle arranged to expel fluid towards a turbine, wherein the turbine comprises a receiving structure arranged to receive fluid from the nozzle and is rotatable in response to the gas flow to cause acceleration of the fluid, in use.

Within the context of an SCR system, the fluid dosing device of the present invention can be deployed within an exhaust gas system where it can be used to introduce reagent, such as a reducing agent, into an exhaust gas flow.

In use, the rotating turbine imparts energy to the fluid to aid atomisation, dispersion and mixing of the fluid in the gas flow. The speed of rotation of the turbine is proportional to the velocity of the gas flow so that, when the velocity of the gas flow increases, the rotation speed of the turbine also increases. The energy imparted to the fluid by the rotating turbine therefore also scales with the velocity of the gas flow. The nozzle and the turbine of the device together define a dispenser for the fluid.

Because energy is added to the fluid by the turbine, the pressure at which the fluid is expelled from the nozzle is not a critical factor in achieving good dispersion of the fluid in the gas flow. In particular, the fluid need not be supplied to the device at an extremely high pressure to achieve good dispersion when the gas flow rate is high. Therefore, a high pressure pump need not be provided to supply fluid to the fluid dosing device, nor must a system capable of delivering fluid over a wide range of pressures be employed. Instead, a low-cost and technically simple system can be provided to supply fluid to the dosing device. For example, if the fluid is a liquid, a pressurised tank or a gravity-fed system would be suitable.

Furthermore, the device is efficient because energy is imparted to only a small volume of fluid to achieve good dispersion. Because the flow of gas past the dosing device is substantially unimpeded, no significant back-pressure arises in the gas flow upstream of the device.

The turbine may have any appropriate shape for effecting the acceleration of fluid. For example, the turbine may comprise a cup arranged to receive fluid from the nozzle. Drillings may be provided in the cup to allow fluid to exit the cup through the drillings, in use. Preferably, the turbine comprises a plurality of radial vanes arranged to interact with the gas flow to cause rotation of the turbine. The vanes may also be adapted to accelerate the fluid, in use.

If the fluid is a liquid, the nozzle may be arranged to partly or wholly atomise the fluid upon expulsion of the fluid from the nozzle, in which case the energy imparted to the fluid due to rotation of the turbine serves to aid dispersion and mixing of the fluid in the gas flow. The nozzle may for example comprise fine bores or passages through which the fluid is forced upon expulsion from the nozzle.

The device may further comprise a spindle associated with the turbine. The turbine may, for example, be attached to and carried on the spindle. The spindle may be integrated with the turbine so that the spindle and the turbine form a single component. Alternatively, the spindle may be an axle and the turbine may rotate around the axle.

The spindle may have any convenient shape. For example, the spindle may be substantially cylindrical, or the spindle may comprise a tapered portion. Preferably, the spindle comprises a plate and the turbine is attached to the plate, for example by welding. If the spindle rotates with the turbine, fluid may be accelerated by the spindle in addition to being accelerated by the turbine. For example, fluid may be accelerated by a plate of the spindle.

Advantageously, channels are provided in the spindle, and the channels are adapted for passage of fluid, in use. The channels may, for example, comprise helical grooves provided on the spindle or drillings through the spindle which are coaxial with the axis of the spindle. The channels encourage the formation of a lubricating film of fluid on the spindle to reduce wear and friction. The nozzle may include a bearing bore in which at least a part of the spindle is carried. The bearing bore may comprise a bush made from a suitable bearing material. Alternatively, the device may comprise a bearing housing, the bearing housing containing bearings within which at least a part of the spindle is carried. The bearings may be of any suitable design, and could for instance be air bearings, rolling element bearings or plain bearings. The bearing housing may be remote from the nozzle, or may be adjacent to the nozzle.

Preferably, the device further comprises a cooling means adapted to cool the spindle, in use. For example, the cooling means may comprise a chamber to contain cooling fluid for cooling of the spindle. In an elegant arrangement, the cooling means comprises a flow of fluid to be dispensed. When a part of the spindle is carried in a bearing bore of the nozzle, for instance, fluid flows between the spindle and the bearing bore so as to cool the spindle, the bearing bore and, in general, the nozzle, before being dispensed through the nozzle. The cooling fluid may instead be air, engine coolant, oil, grease, water or another suitable cooling fluid, and may be supplied to the device from a reservoir. Furthermore, the cooling fluid may be recirculated through or within the device in use, or may be applied to the spindle during manufacture. The cooling fluid may also serve to lubricate the spindle. Equivalently, the device may comprise a cooling means adapted to cool the nozzle and/or the turbine, for example if a spindle is not provided.

Preferably, the spindle carries an annular groove to define an annular chamber between the nozzle and the spindle into which fluid is delivered prior to expulsion of the fluid towards the turbine.

Advantageously, the device comprises a sealing surface of the nozzle and a retaining spring which acts to close the sealing surface of the nozzle, so as to prevent expulsion of fluid from the nozzle. This arrangement prevents fluid from escaping through the nozzle when release of fluid is not required. The device may further comprise a sealing surface associated with the turbine, wherein the retaining spring acts to bias the sealing surface associated with the turbine against the sealing surface of the nozzle. The sealing surface associated with the turbine may be a surface of the turbine or, if a spindle is provided, the sealing surface associated with the turbine may be a surface of the spindle. For example, if the spindle has a plate, the sealing surface associated with the turbine may conveniently be a surface of the plate.

Preferably, the nozzle is arranged so that, in use, fluid within the nozzle provides a force opposed to the bias of the retaining spring to move the sealing surface associated with the turbine away from the sealing surface of the nozzle when the pressure of fluid within the nozzle exceeds a threshold pressure. If an annular chamber is provided as described above, the fluid within the chamber may act upon the spindle to move the sealing surface associated with the turbine away from the sealing surface of the nozzle.

The retaining spring may be disposed within the nozzle. For example, the spindle may be a compression spring, and may be disposed around a spindle carried within a bearing bore of the nozzle. Instead, the retaining spring may be disposed outside the nozzle. In this case, the device may further comprise a pin associated with the turbine, wherein the retaining spring bears upon the pin. For example, when a spindle is provided, the pin may be part of the spindle and may protrude through an opening in the turbine. In this case, the retaining spring may be a compression spring or may instead be a cantilever spring.

In a preferred embodiment, the device further comprises a feed pipe arranged to supply fluid to the nozzle. The feed pipe advantageously comprises a tube arranged to carry the fluid and a jacket defining a compartment between the tube and the jacket. The compartment may be evacuated so as to limit heat transfer from the gas flow and the surroundings of the device to the fluid contained within the feed pipe. The jacket therefore defines a means for thermally insulating the fluid in the feed pipe. A thermally-insulating material may instead be provided within the compartment to limit heat transfer to the reagent. Alternatively, the jacket may be arranged to allow a flow of cooling fluid, for example air, to pass through the compartment to cool the feed pipe. Providing a means for thermally insulating the fluid in the feed pipe is advantageous when the gas flow is at a temperature greater than a decomposition temperature of the fluid. For example, when the fluid is a liquid, the decomposition temperature may be the boiling point of the liquid or the temperature above which precipitation or exsolution of a solute occurs.

The fluid dosing device may be arranged so that, in use, fluid is dispensed from the nozzle in a direction parallel to the direction of the gas flow. Alternatively, the fluid dosing device may be arranged so that, in use, fluid is dispensed from the nozzle in a direction opposed to the direction of the gas flow or in a direction at an angle to the direction of the gas flow.

The fluid dosing device of the present invention is ideally suited to applications in which the fluid is a liquid reagent for selective catalytic reduction, for example a urea solution, and the gas flow is an exhaust gas flow contained within an exhaust gas pipe. To this end, the invention extends to an exhaust system for conveying exhaust gases from an internal combustion engine, comprising a fluid dosing device as previously described.

Preferred embodiments of the present invention will now be described, by way of example only, with reference to the accompanying drawings, in which:
Figure 1 is a cross-sectional view of a fluid dosing device according to a first embodiment of the present invention, mounted in an exhaust passage of an internal combustion engine;
Figure 2a is a cross-sectional view of part of the fluid dosing device of Figure 1 in a closed position, and Figure 2b is a cross-sectional view of part of the fluid dosing device of Figure 1 in an open position in use;
Figure 3 a is a cross-sectional view of part of a fluid dosing device according to a second embodiment of the present invention in a closed position, and Figure 3b is a cross-sectional view of part of the fluid dosing device of Figure 3a in an open position in use;
Figure 4a is a cross-sectional view of part of a fluid dosing device according to a third embodiment of the present invention in a closed position, and Figure 4b is a cross-sectional view of part of the fluid dosing device of Figure 4a in an open position in use; and
Figure 5 is a cross-sectional view of part of a fluid dosing device according to a fourth embodiment of the present invention.

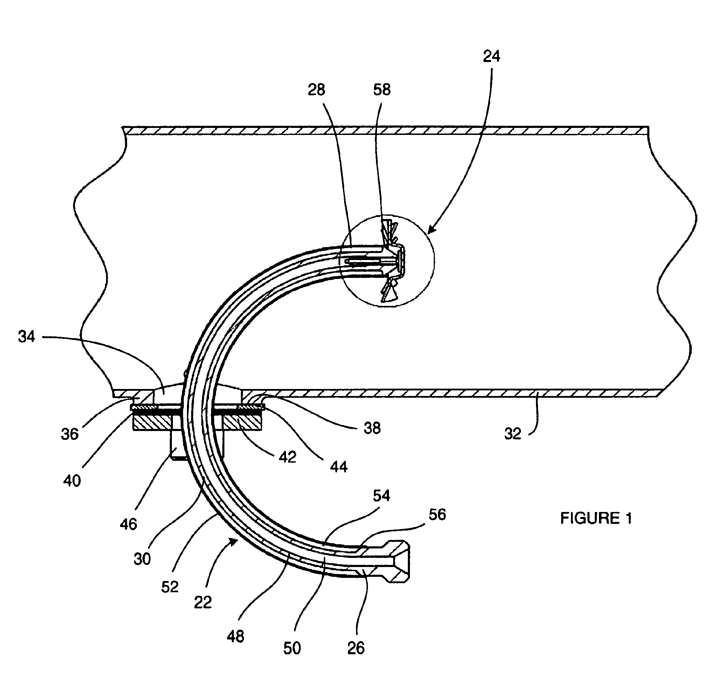

Referring to Figure 1, in a first embodiment of the present invention there is provided a fluid dosing device arranged to dispense reagent into a flow of exhaust gases from an internal combustion engine. The device comprises a feed pipe 22 and a dispenser 24. The feed pipe 22 comprises an inlet portion 26, an outlet portion 28, and a generally semicircular connecting portion 30 to connect between the inlet portion 26 and the outlet portion 28. In use, reagent enters the feed pipe 22 through the inlet portion 26 and exits the feed pipe 22 through the outlet portion 28. The connecting portion 30 is arranged so that, in use, the direction of flow of reagent in the outlet portion 28 is opposite to the direction of flow of reagent in the inlet portion 26.

In use, the dosing device is mounted in an exhaust passage, such as an exhaust pipe 32, of an internal combustion engine (not shown). The dispenser 24 and the outlet portion 28 of the feed pipe 22 are disposed within the bore of the exhaust pipe 32. The inlet portion 26 of the feed pipe 22 is disposed externally to the exhaust pipe 32 for connection to a reagent supply (not shown).

The connecting portion 30 of the feed pipe 22 passes through a port comprising an opening 34 in a wall of the exhaust pipe 32 and is held in place by a sealing arrangement, as will now be described.

The opening 34 is cylindrical, and has a surrounding collar 36 on the external surface of the exhaust pipe 32. The collar 36 is shaped to define a planar mounting face 38. An annular flange 40 is carried on the connecting portion 30 of the feed pipe 22. The flange 40 is pressed towards the mounting face 38 by a clamping ring 42, and a sealing washer 44 is clamped between the flange 40 and the mounting face 38 to form a gas-tight seal. Threaded studs (not shown) are carried on the collar 36 and pass through complementary holes (not shown) in the sealing washer 44, flange 40 and clamping ring 42. The clamping ring 42 is held on the exhaust pipe 32 by way of internally-threaded nuts 46 screwed onto the studs.

The feed pipe 22 comprises a tube 48 having a bore 50 through which reagent can pass. The tube 48 is received within a jacket 52 for the pipe which defines a compartment 54 between the tube 48 and the jacket 52. The jacket 52 is sealed to the tube 48 at a first seal 56 at the inlet portion 26 of the feed pipe 22 and at a second seal 58 at the outlet portion 28 of the feed pipe 22 so that the compartment 54 defines an enclosed void. The compartment 54 is evacuated to limit the transfer of heat from hot exhaust gases carried within the exhaust pipe 32 to the reagent in the bore 50 of the tube 48, in use, so as to prevent overheating of the reagent.

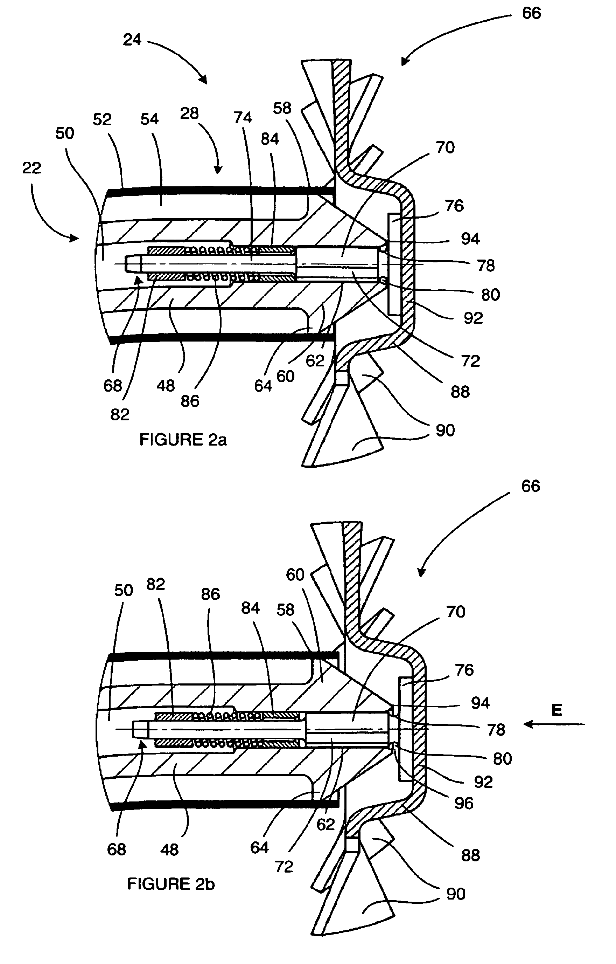

The dispenser 24 of the first embodiment of the invention is shown in detail in Figures 2a and 2b. In the outlet portion 28 of the feed pipe 22, the tube 48 is shaped into a conical frustum to form a nozzle 60. The nozzle 60 has a bore with a restricted diameter to form a cylindrical bearing bore 62. A rim 64 of the nozzle 60 meets with and seals against the jacket 52 of the feed pipe 22 to form the second seal 58.

The dispenser 24 comprises a turbine 66 supported on a spindle 68. The spindle 68 comprises a first cylindrical portion 70 and a second cylindrical portion 74. The first portion 70 of the spindle 68 is adjacent to the turbine 66 and has a diameter slightly smaller than the bearing bore 62 of the nozzle 60, so that the first portion 70 of the spindle 68 is a close clearance fit within the bearing bore 62. Longitudinal rectangular flats 72 are also provided on the first portion 70 of the spindle 68. The second portion 74 of the spindle 68 has a smaller diameter than the first portion 70 and extends away from the turbine 66 into the bore 50 of the tube 48.

The spindle 68 terminates at one end in a circular plate 76 upon which the turbine 66 is carried. The turbine 66 is attached to the plate 76 by way of a welded joint. An annular groove 78 is provided in the first portion 70 of the spindle 68 adjacent to the plate 76. The bearing bore 62 of the nozzle 60 has a flared or increasing internal diameter in the region of the annular groove 78, so as to define an annular chamber 80 between the annular groove 78, the bearing bore 62 and the plate 76.

A retaining collar 82 is clamped onto the second portion 74 of the spindle 68, close to the end of the spindle 68 opposite the plate 76. A bush 84 is firmly clamped within the bearing bore 62 of the nozzle. The second portion 74 of the spindle 68 is a clearance fit within the bush 84. A compression spring 86 is disposed around the spindle 68 and acts between an end surface of the retaining collar 82 and an end surface of the bush 84.

The turbine 66 comprises a central dished region or cup 88 surrounded by radially-directed vanes 90. The cup 88 is positioned to partially envelope the nozzle 60 so that the plate 76 of the spindle 68 is accommodated within the interior of the cup 88 and is attached to a flat base region 92 of the cup 88.

In use, the feed pipe 22 is supplied with reagent from a suitable supply (not shown), such as a pressurised tank. The release of reagent from the dosing device can be started and stopped by controlling the pressure of the reagent entering the feed pipe 22 as will now be described.

The chamber 80 is in communication with the reagent supply by way of the tube 48, the clearance between the second portion 74 of the spindle 68 and the bush 84, and the clearance between the first portion 70 of the spindle 68 and the bearing bore 62. In addition, the flats 72 on the first portion 70 of the spindle 68, together with the bearing bore 62, define additional channels to provide passage for reagent past the first portion 70 of the spindle 68 and into the chamber 80. Changes in the pressure of the reagent in the feed pipe 22, due to changes in the reagent supply pressure, are consequently experienced within the chamber 80.

The spindle 68 is biased by the spring 86 so that, when the pressure of the reagent in the chamber 80 is low, the plate 76 abuts a sealing surface 94 of the nozzle 60 as shown in Figure 2a. This seals the dosing device in a closed position to prevent leakage of reagent into the exhaust flow when dosing of reagent is not required, for example when the engine is turned off.

Referring to Figure 2b, when release of the reagent is required, the reagent supply pressure is increased and so the pressure of the reagent in the chamber 80 increases. The reagent under pressure acts upon the plate 76 and applies an axial force to the spindle 68 opposed to the biasing force applied by the spring 86. When the pressure of the reagent increases above a threshold pressure, the pressure in the chamber 80 is sufficient to overcome the spring force and the plate 76 moves away from the sealing surface 94 to open the dosing device by creating an annular passage 96 between the chamber 80 and the interior of the cup 88. The annular passage 96 is shown greatly exaggerated in Figure 2b.

When the dosing device is in an open position, the spindle 68 is free to rotate within the bearing surface 62 of the nozzle 60. When the spindle 68 rotates, the retaining collar 82 also rotates. The spring 86 acts upon a bearing surface of the collar 82, so that the collar 82 can rotate against the spring 86 with minimal friction. Alternatively, or in addition, the spring 86 may act on a bearing surface of the bush 84 to allow rotation of the spring 86 with respect to the bush 84.

The reagent within the tube 48 acts to lubricate the bearing surfaces of the collar 82 and the bush 84 and the reagent flowing past the first portion 70 of the spindle 68 lubricates the bearing surface 62 of the nozzle 60. Furthermore, the flow of reagent within the outlet portion 28 of the tube 22 provides a cooling means to cool the spindle 68 and the nozzle 60.

In use, the vanes 90 of the turbine 66 are exposed to flowing exhaust gases within the exhaust pipe (not shown in Figures 2a and 2b). Therefore, when the dosing device is in an open position, the spindle 68 is driven to rotate by the action of the exhaust gases on the vanes 90 of the turbine 66. When the flow of exhaust gases is directed towards the face of the turbine 66 opposite the feed pipe 22, as indicated by the arrow E in Figure 2b, the turbine 66 rotates in an anticlockwise direction when viewed from a position upstream of the dispenser.

Reagent flows out of the chamber 80 through the annular passage 96 and into the cup 88 of the turbine 66. Upon contacting the surfaces of the cup 88 of the turbine 66 or the plate 76 of the spindle 68, the reagent is accelerated tangentially and is thrown outwards towards the vanes 90 of the turbine 66, whereupon the reagent is further accelerated before entering the exhaust gas flow with a high velocity, tangential to the turbine 66 and perpendicular to the exhaust gas velocity.

The energy imparted to the reagent as it interacts with the plate 76 and the turbine 66 serves to atomise the reagent as it enters the exhaust gas flow, thus ensuring good dispersion of the reagent and satisfactory mixing with the exhaust gases.

As the engine speed increases, the velocity of the exhaust gases increases and the turbine 66 rotates at a higher speed. The reagent passing into the cup 88 of the turbine 66 is accelerated faster as more energy is transferred to it, and consequently the velocity of the reagent entering the exhaust gas flow is higher, as required to achieve optimum dispersion in the faster-flowing exhaust gases. Because the speed of the turbine 66 is approximately proportional to the velocity of the exhaust gases, and the acceleration of the reagent scales with the speed of the turbine 66, optimum dispersion of the reagent in the exhaust gas flow can be achieved at all engine speeds, so that the dosing device is self-regulating with engine speed.

Because the energy required for atomisation, dispersion and mixing of the reagent is supplied by the exhaust gases and transferred to the reagent by way of the turbine 66, the pressure at which reagent is supplied to the dispenser 24 can be considerably lower than would be required if the turbine 66 were not present. Furthermore, the reagent supply pressure need not vary with engine speed. These factors allow a simple, low-cost reagent supply system to be employed.

Further embodiments of the present invention will now be described. For convenience, only those features differing from the features of the first embodiment described with reference to Figures 1, 2a and 2b will be described. Like features of the embodiments share like reference numerals.

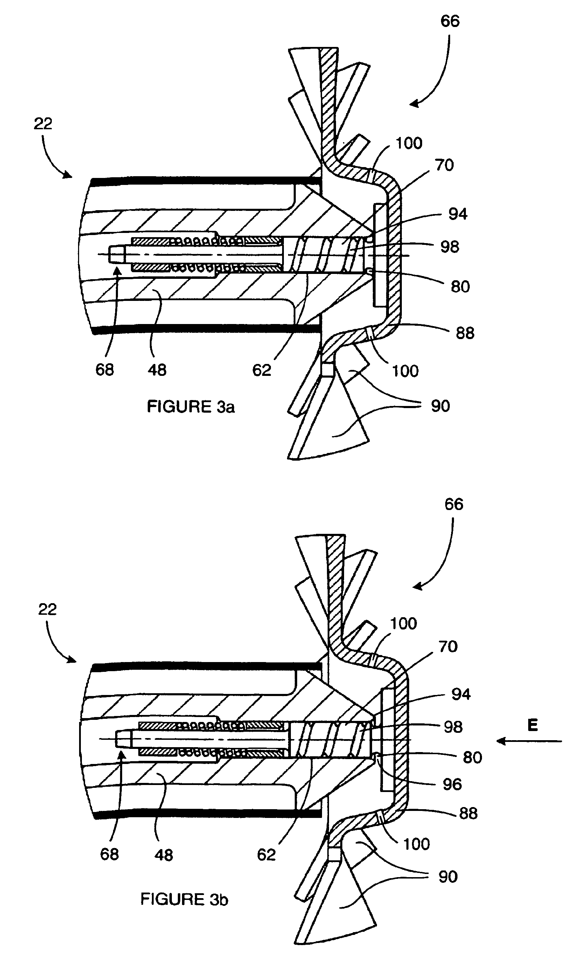

Referring to Figures 3a and 3b, in a second embodiment of the present invention there is provided a reagent dosing device similar to the first embodiment of the invention, except in that, in place of the flats of the spindle, a helical groove 98 is formed in the first portion 70 of the spindle 68 to define an additional channel to provide passage for reagent past the first portion 70 of the spindle 68 and into the chamber 80.

The helical groove 98 is arranged so that, when the spindle 68 rotates in response to the action of the exhaust gases on the vanes 90 of the turbine 66 in use, reagent tends to enter the helical groove 98 and be transported towards the chamber 80. In other words, when the flow of exhaust gases is directed towards the face of the turbine 66 opposite the feed pipe 22, as indicated by the arrow E in Figure 3b, the turbine 66 rotates in an anticlockwise direction when viewed from a position upstream of the dispenser, and the helix of the helical groove 98 is left-handed with respect to the direction of flow of the exhaust gases (E).

The helical groove 98 therefore acts to pump reagent towards the chamber 80 from the tube 48 when the spindle 68 rotates. In addition, the helical groove 98 helps to clean the surface of the bearing bore 62 by ensuring that any deposits, such as those which may result from degradation of the reagent, are swept along the helical groove 98 with the reagent flow.

In addition, drillings 100 are provided in the cup 88 of the turbine 66, to provide a path for reagent to pass from the cup 88 into the exhaust gas flow, without impinging on the vanes 90 of the turbine 66, when the dosing device is in an open position as shown in Figure 3b.

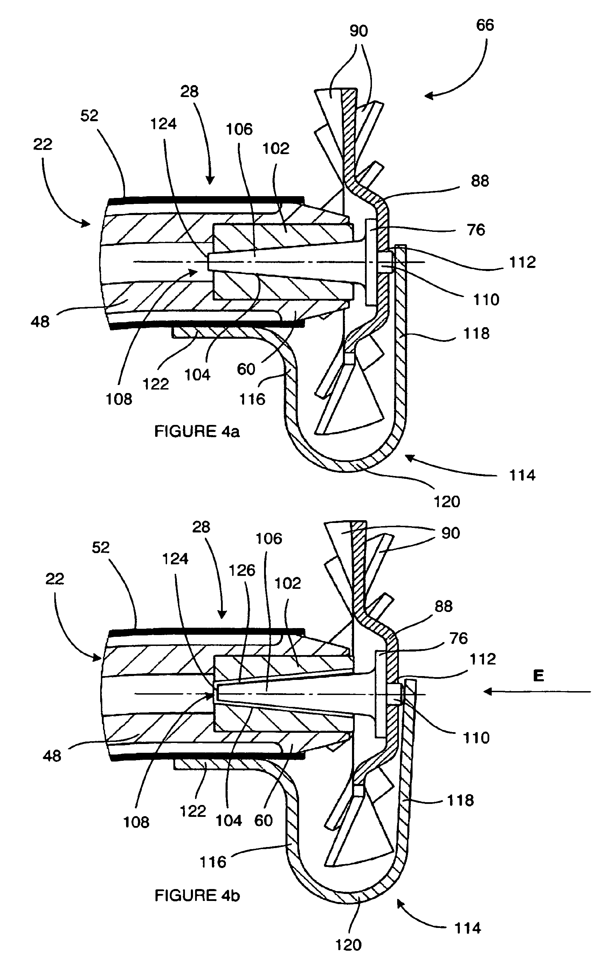

Referring to Figures 4a and 4b, in a third embodiment of the present invention, there is provided a reagent dosing device in which, in the outlet portion 28 of the feed pipe 22, a portion of the tube 48 has an increased internal diameter to accommodate a bearing bush 102 of the nozzle 60. The bearing bush 102 is made from a suitable bearing material, examples of which include poly(tetrafluoroethene) (PTFE), poly(etheretherketone) (PEEK), graphite, silicon carbide and zirconia.

The bearing bush 102 has a tapered bearing bore 104 to accommodate a tapered portion 106 of a spindle 108. The end of the spindle 108 adjacent to the widest part of the tapered portion 106 is formed into a plate 76 which, as in the previously described embodiments, is welded to a cup 88 of a turbine 66. A pin 110 projects from the plate 76 of the spindle 108 and passes through a centrally-disposed hole 112 in the cup 88 of the turbine 66.

The device is provided with a retaining spring 114 comprising a strip of spring material formed into a generally 'U'-shaped structure, having first and second arms 116, 118 connected by a part-cylindrical base 120. The first arm 116 of the spring 114 is bent outwards through approximately 90° to form a mounting flange 122. The mounting flange 122 is affixed to the jacket 52 in the outlet portion 28 of the feed pipe 22. The second arm 118 of the spring 114 acts as a cantilever spring and bears upon the pin 110 of the spindle 108 to push the tapered portion 106 of the spindle 108 against the bearing bore 104. The spring 114 therefore acts to retain the spindle 108, and hence the turbine 66, in the dosing device. Because the retaining spring 114 is directly exposed to the hot exhaust gas flow, the material of the spring 114 is a high-temperature resistant material such as an Inconel® or Nimonic® nickel-chromium alloy.

In use, the reagent in the tube 48 of the feed pipe 22 acts upon an end 124 of the spindle 108 opposite the plate 76. When the pressure of reagent is low, the force acting on the end 124 of the spindle 108 due to the reagent is insufficient to push the spindle 108 away from the bearing bore 104. The tapered portion 106 of the spindle 108 acting upon the bearing bore 104 forms a seal to prevent flow of reagent past the spindle 108 towards the turbine 66.

If the pressure of reagent in the feed pipe 22 is increased above a threshold level, the force acting on the end 124 of the spindle 108 due to the reagent becomes sufficient to overcome the opposing force of the retaining spring 114 and, as shown in Figure 4b, the spindle 108 is displaced to create a clearance 126 (shown greatly exaggerated in Figure 4b) between the spindle 108 and the bearing bore 104.

With the device in this open position, as in the previous embodiments of the invention, the spindle 108 is now free to rotate in the bearing bore 104, and is driven to do so by the exhaust gases acting on the vanes 90 of the turbine 66. When the flow of exhaust gases is directed towards the face of the turbine 66 opposite the feed pipe 22, as indicated by the arrow E in Figure 4b, the turbine 66 rotates in an anticlockwise direction when viewed from a position upstream of the device. Reagent can pass through the clearance 126 and past the spindle 108 to flow into the cup 88 of the turbine 66. The reagent flowing past the spindle 108 within the clearance 126 acts to lubricate the surface of the spindle 108 and the bearing bore 104 of the bush 102, and the flow of reagent also provides a cooling means to cool the spindle 108 and the nozzle 60.

After the reagent passes out of the clearance 126, it impinges on the plate 76 of the spindle 108 and the cup 88 and is thrown outwards towards the vanes 90 of the turbine 66. The reagent then enters the exhaust flow with a high tangential velocity, and the energy imparted to the reagent by the rotating turbine 66 assists in atomising and distributing the reagent within the exhaust flow as previously described.

By providing a tapered spindle 108 and bearing bore 104, the need for a separate sealing surface (such as indicated at 94 in Figures 2a to 3b) is eliminated. Furthermore, the size of the clearance 126 is related to the pressure of the reagent. For example, if the flow rate of the reagent increases, the pressure of reagent increases and the size of the clearance 126 increases. By arranging the retaining spring 114 to apply a suitable level of restoring force to the spindle 108 through the pin 110, the size of the clearance at a given reagent pressure or flow rate can be arranged to provide optimum bearing properties between the tapered portion 106 of the spindle 108 and the bearing bore 104 of the bush 102.

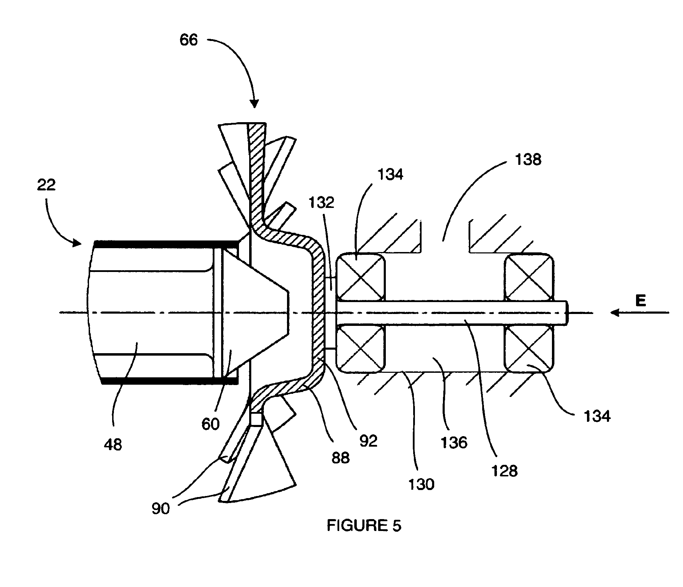

Referring to Figure 5, according to a fourth embodiment of the present invention, there is provided a dosing device having a turbine 66 mounted on a spindle 128 carried in a bearing housing 130. As in the previous embodiments, a cup 88 of the turbine 66 partially envelopes a nozzle 60 of the tube 48. The spindle 128 comprises a cylindrical rod terminating at one end in a plate 132. The plate 132 is attached to a flat portion 92 of the cup 88, on the opposite side of the turbine 66 to the nozzle 60 so that, in this embodiment, the spindle 128 is not located within the flow path of the reagent but is instead accommodated within a separate housing remote from the nozzle 60 and the feed pipe 22.

Bearings 134, which may for example comprise rolling elements, air bearings or plain bearings, are housed within the bearing housing 130 and support the spindle 128. The spindle 128 is free to rotate within the bearings 134 under the driving force of the turbine 66. Because the bearings 134 are subjected to high temperatures, due to the proximity of the bearings 134 to the hot exhaust gases and also due to heat conduction through the bearing housing 130 and the spindle 128, the bearings 134 are wholly or partly made from a heat-resistant material such as ceramic.

A chamber 136 is provided within the bearing housing 130 which is in communication with a source of cooling fluid (not shown) by way of a passage 138 so that the chamber 126 contains cooling fluid in use. Heat from the bearings 134 is dissipated into the cooling fluid in the chamber 136 so as to reduce the temperature of the bearings 134. For example, the cooling fluid may be air bled from the inlet manifold of the engine, downstream of a turbocharger, or could alternatively be engine coolant, grease or water. In the latter cases, the cooling fluid could be supplied to the chamber 136 from a suitable reservoir (not shown). Alternatively, or in addition, the cooling fluid may be re-circulated by way of additional passages (not shown) in the bearing housing 130. A further option is to provide a cooling fluid such as grease to the bearings 134 during manufacture and, if necessary, periodically thereafter, in a total-loss lubrication system.

The bearing housing 130 is attached to the exhaust pipe (not shown in Figure 5) by way of a suitable attachment means (not shown), remote from the feed pipe 22. The attachment means accommodates the passage 138 for connection to the source of cooling fluid, if present.

In use, the turbine 66 rotates due to the action of the exhaust gases on the vanes 90 of the turbine 66. When the flow of exhaust gases is directed towards the face of the turbine 66 opposite the nozzle 60, as indicated by the arrow E in Figure 5, the turbine 66 rotates in an anticlockwise direction when viewed from a position upstream of the device. When required, reagent is released from the nozzle 60 and is sprayed towards the turbine 66. Upon hitting the turbine 66, the reagent is thrown outwards and accelerated to assist in atomisation and mixing of the reagent in the exhaust gas flow as previously described.

One advantage of the arrangement of the fourth embodiment of the invention is that the reagent is not significantly heated before it hits the turbine 66, as will occur in the previous embodiments of the invention.

The bore (not shown) of the nozzle 60 is shaped so as to optimise the spray pattern of reagent passing from the nozzle 60 into the cup 88 of the turbine 66.

It will be appreciated that the features described with reference to the various embodiments of the invention could be provided in combinations not explicitly described here. Furthermore, several possible modifications lie within the scope of the present invention, some of which will now be described.

As previously described, the pressure at which reagent is supplied to the dosing device by the reagent supply is not critical. A wide variety of systems could therefore be used as a reagent supply to the dosing device. A pumped system could be employed, in which the reagent is conveyed from a storage tank to the dosing device by a pump. Suitable pumps may for example be electrically powered, driven mechanically by the engine, or coupled to a hydraulic system of the vehicle. Alternatively, a gravity-fed system could be used, in which the flow of reagent from a storage tank mounted above the dosing device is sufficient to supply the necessary quantity of reagent.

As another example, a pressurised reagent supply could be used, in which reagent is stored in a pressurised tank and the pressure drop between the tank and the outlet of the dosing device drives the flow of reagent. The tank could be conveniently pressurised by connecting an air space within the tank with an inlet passage of the engine. In an engine fitted with a turbocharger, for example, the connection to the inlet passage would be sited downstream of a compressor wheel of the turbocharger to ensure a positive air pressure in the air space.

Release of reagent into the exhaust gas flow can be controlled by adjusting the pressure of reagent in the feed pipe. For example, in the first three embodiments of the invention, an increase in the reagent pressure in the feed pipe above a certain threshold pressure causes the device to adopt an open position, so that reagent can discharge into the exhaust gas flow. In the fourth embodiment of the invention, the discharge of reagent is more simply effected by providing sufficient reagent pressure in the feed pipe to force reagent through the nozzle. Alternatively, an arrangement for opening and closing a sealing surface of the nozzle for controlling the flow of reagent could be incorporated in a device similar to that shown in Figure 5, for example by providing a spring to bias the turbine against the nozzle.

The reagent supply may be arranged so that the reagent pressure in the feed pipe, and therefore the discharge of reagent into the exhaust gas flow, is sufficient for discharge of reagent to occur constantly while the engine is running. Alternatively, the reagent supply may incorporate means for adjusting the pressure so as to control the rate of discharge of reagent during use. For instance, a restriction with an opening of variable size may be present. By controlling the opening of the restriction, for example by an actuator in response to a control signal from an engine control unit, the pressure of reagent reaching the feed pipe can be adjusted. Similarly, a valve could be provided to start and stop the flow of reagent. Such a restriction or valve could be integrated into the feed pipe of the dosing device or provided in the reagent supply. In a pumped system, the speed of the pump may be controlled by an engine control unit to effect control of the rate of discharge.

In the first three embodiments of the invention, it is contemplated that the device could be set into an open position by action of gas pressure, for example air pressure, on the spindle. For instance, this allows the air initially present in the feed pipe after manufacture of the device to be replaced by reagent during a first use after installation in a vehicle, when the air is compressed upon connection of the feed pipe to a pressurised supply of liquid reagent. Furthermore, this allows the device to be used to supply a gaseous fluid.

The geometry of the feed pipe and the way in which the dosing device is mounted in the exhaust pipe may depart from the examples described. The feed pipe could have any convenient shape, for example the feed pipe could be straight or 'L'-shaped. The outlet portion of the feed pipe may be directed so that reagent flows with or against the exhaust gas flow. Indeed, the outlet portion of the feed pipe may be directed so that reagent flows at an angle to the exhaust gas flow or perpendicularly to the exhaust gas flow. The dosing device may be permanently mounted in the exhaust pipe, for example by welding a flange carried on the dosing device to the exhaust pipe.

The jacket of the feed pipe may be omitted, for example if the reagent chosen is not adversely affected by the temperature of the exhaust gases. Alternatively, the compartment enclosed by the jacket of the feed pipe may be connected to a source of cooling fluid, for example air or engine coolant, and a drain, for example the inlet of a heat exchanger. In this way, a means is provided to remove heat from the reagent in the feed pipe.

Although the invention is ideally suited to dispensing a reagent comprising an ammonia-containing reducing agent for selective catalytic reduction of nitrogen oxides, for example an aqueous solution of urea, it will be appreciated that the present invention could find application in many other systems where it is desirable to disperse a fluid into a gas flow, especially when the flow rate of the gas varies considerably. The invention is particularly useful when the fluid is a liquid, so that the turbine provides energy for atomisation of the liquid, but use of the invention with a gaseous fluid is also possible, in which case the turbine provides additional energy for mixing of the gases. In addition, the present invention is not limited to use with a reagent, but could also be used to dose a gas flow with, for instance, a catalytic or inert fluid, or a cooling fluid to effect cooling of the gas flow.

It will also be apparent that the spindle could be mounted in the device in a variety of different ways. For example, when the spindle is mounted in the nozzle, it may run in one or more separate bushes or bearings or bear directly on the bore of the nozzle. Any suitable means for retaining the spindle in the device could be employed, allowing axial movement of the spindle so as to open and close the device if required.

Additional channels, such as flats or helical grooves as previously described, need not be present if a sufficient quantity of reagent can flow in the clearance between the spindle and the bearing surface or bush. If additional channels are provided to augment reagent flow past the spindle, they may have alternative forms, such as longitudinal drillings through the body of the spindle, and may be provided in a tapered portion of a spindle.

As another example, a helical groove may be provided having the opposite sense to that shown in Figures 3a and 3b, so that the groove defines a right-handed helix with respect to the direction of flow of the exhaust gases. In this case, when the spindle rotates due to the action of the exhaust gases on the turbine, the groove tends to pump reagent away from the chamber and towards the feed pipe, creating a back pressure. To discharge reagent, therefore, the supply pressure of the reagent must be sufficient to overcome the back pressure. This can help to maintain a coating of reagent between the spindle and the bearing surface, so that lubrication of the spindle is ensured even when the flow of reagent is low. Furthermore, such an arrangement could be used to prevent release of reagent at supply pressures below that required to overcome the back pressure, so that the chamber could be permanently open to the cup of the turbine and the features effecting opening and closing of the device by axial movement of the spindle could be eliminated.

The geometry of the turbine can take any appropriate form. For example, the number, location, attack angle, size and shape of the vanes could be varied in order to achieve a particular response of the turbine to the exhaust gas flow. The optimum turbine geometry will depend upon, amongst other parameters, the bore of the exhaust pipe, the desired release rate of the reagent as a function of exhaust gas velocity and the turbine rotation speed required to impart the optimum amount of energy to the reagent.

Furthermore, the geometry of the turbine may be altered to optimise the interaction between the reagent and the turbine. For example, the turbine may be arranged so that reagent passes from the cup onto the vanes, as previously described, or instead the reagent may pass directly from the cup into the exhaust flow through passages (as shown in Figures 3 a and 3b) or by locating the vanes distant from the edge of the cup.

The depth of the cup and the angle between the walls of the cup and the rotational axis of the turbine can also be chosen to provide the optimum interaction between the reagent and the turbine. The shape of the cup influences, for example, the time available for the fluid to accelerate, the amount of heat transferred from the exhaust gases to the reagent, and the amount of evaporation of the reagent that occurs before the reagent enters the exhaust gas flow.

As an alternative to a turbine with an integrated cup, a separate turbine and cup could be provided, where the turbine carries vanes and the separate cup, which is driven by the turbine, receives and accelerates reagent from the nozzle. Instead of a cup, a disc or other suitable structure could be provided to receive and accelerate the reagent. If, for example, a disc is provided, the surface tension of the reagent should be sufficient to keep the reagent in contact with the disc during acceleration of the reagent. Furthermore, the turbine and the spindle could be integrated to form a single component or, instead of a rotating spindle, a fixed spindle or axle could be provided upon which a turbine is mounted so that the turbine is able to rotate about the spindle.

The shape of the internal bore of the nozzle, and the distance between the nozzle and the turbine, could also be chosen to optimise the device. For example, in the embodiments previously described, the cup of the turbine partially envelopes the nozzle. However, the nozzle may be positioned outside the envelope of the cup. Furthermore, the reagent may be wholly or partially atomised by the nozzle before the reagent reaches the turbine, so that the turbine principally provides energy for mixing of the reagent with the exhaust gas.

When the spindle is not mounted within the bore of the nozzle, but is instead mounted in bearings in a separate housing as described with reference to Figure 5, the axis of the nozzle need not be aligned with the rotation axis of the turbine. Instead, the nozzle could for example be directed to dispense reagent into the turbine at an angle to or at a position offset from the rotation axis of the turbine. Indeed, the nozzle could be directed to dispense a spray of reagent in a direction perpendicular to the exhaust gas flow, whereupon the reagent is carried by the flowing exhaust gases to a spinning turbine of the present invention positioned downstream of the nozzle. In any case, the bearing housing and the nozzle may be mounted in the exhaust pipe by separate mounting means as previously described. However, the bearing housing may alternatively or in addition be mounted in connection with the feed pipe.

## Claims

1. A fluid dosing device for dispensing fluid into a gas flow, the device comprising a nozzle (60) arranged to expel fluid towards a turbine (66), wherein the turbine (66) comprises a central dished or disc region arranged to receive fluid from the nozzle (60) and is rotatable in response to the gas flow to cause acceleration of the fluid, in use.

2. A fluid dosing device according to Claim 1, wherein the central dished or disc region comprises a cup (88).

3. A fluid dosing device according to Claim 2, wherein drillings (100) are provided in the cup (88) to allow fluid to exit the cup (88) through the drillings (100), in use.

4. A fluid dosing device according to any preceding claim, wherein the turbine (66) comprises a plurality of radial vanes (90).

5. A fluid dosing device according to Claim 4, wherein the vanes (90) are adapted to accelerate the fluid, in use.

6. A fluid dosing device according to any preceding claim, wherein the device further comprises a spindle (68; 108; 128) associated with the turbine (66).

7. A fluid dosing device according to Claim 6, wherein the spindle (68; 128) is substantially cylindrical.

8. A fluid dosing device according to Claim 6, wherein the spindle (108) comprises a tapered portion (106).

9. A fluid dosing device according to any of Claims 6 to 8, wherein the spindle (68; 108; 128) comprises a plate (76; 132) and the turbine (66) is attached to the plate (76; 132).

10. A fluid dosing device according to any of Claims 6 to 9, wherein channels are provided in the spindle (76), the channels being adapted for passage of fluid, in use.

11. A fluid dosing device according to any of Claims 6 to 10, wherein the nozzle (60) includes a bearing bore (62; 104) in which at least a part of the spindle (68; 108) is carried.

12. A fluid dosing device according to any of Claims 6 to 10, wherein the device further comprises a bearing housing (130), the bearing housing (130) containing bearings (134) within which at least a part of the spindle (128) is carried.

13. A fluid dosing device according to Claim 11 or Claim 12, wherein the device further comprises a cooling means for cooling the spindle (68; 108; 128), in use.

14. A fluid dosing device according to Claim 13, wherein the cooling means comprises a chamber (136) to contain cooling fluid for cooling of the spindle (128).

15. A fluid dosing device according to Claim 13 or Claim 14, wherein the cooling means comprises a flow of fluid to be dispensed.

16. A fluid dosing device according to any of Claims 6 to 15, wherein the spindle (68) carries an annular groove (78) to define an annular chamber (80) between the nozzle (60) and the spindle (68) into which fluid is delivered prior to expulsion of the fluid towards the turbine (66).

17. A fluid dosing device according to any preceding claim, wherein the device further comprises a sealing surface (94; 104) of the nozzle (60) and a retaining spring (86; 114) which acts to close the sealing surface (94; 104) of the nozzle (60), so as to prevent expulsion of fluid from the nozzle (60).

18. A fluid dosing device according to Claim 17, wherein the device further comprises a sealing surface associated with the turbine (66), wherein the retaining spring (86; 114) acts to bias the sealing surface associated with the turbine (66) against the sealing surface (94; 104) of the nozzle (60).

19. A fluid dosing device according to Claim 18 arranged so that, in use, fluid within the nozzle (60) provides a force opposed to the bias of the retaining spring (86; 114) to move the sealing surface associated with the turbine (66) away from the sealing surface (94; 104) of the nozzle (60) when the pressure of fluid within the nozzle (60) exceeds a threshold pressure.

20. A fluid dosing device according to Claim 18 or Claim 19, wherein the sealing surface associated with the turbine (66) is a surface of the turbine (66).

21. A fluid dosing device according to any of Claims 17 to 20, wherein the retaining spring (114) is disposed outside the nozzle (60).

22. A fluid dosing device according to Claim 21, wherein the device further comprises a pin (110) associated with the turbine (66), wherein the retaining spring (114) bears upon the pin (110).

23. A fluid dosing device according to any of Claims 17 to 22, wherein the retaining spring (86) is a compression spring.

24. A fluid dosing device according to any preceding claim, wherein the device further comprises a feed pipe (22) arranged to supply fluid to the nozzle (60).

25. A fluid dosing device according to Claim 24, wherein the feed pipe (22) comprises a tube (48) arranged to carry the fluid and a jacket (52) defining a compartment (54) between the tube (48) and the jacket (52).

26. A fluid dosing device according to any preceding claim, wherein the fluid is a liquid reagent for selective catalytic reduction.

27. An exhaust system for conveying exhaust gases from an internal combustion engine, comprising a fluid dosing device according to any preceding claim.

## Patentansprüche

1. Fluiddosiervorrichtung zur Ausgabe von Fluid in einen Gasstrom, wobei die Vorrichtung eine Düse (60) zum Austreiben von Fluid in Richtung auf eine Turbine (66) umfasst, wobei die Turbine (66) eine zentrale teller- oder scheibenförmige Region umfasst, die zum Aufnehmen von Fluid aus der Düse (60) angeordnet ist und im Gebrauch als Reaktion auf den Gasstrom drehbar ist, um die Beschleunigung des Fluids zu verursachen.

2. Fluiddosiervorrichtung nach Anspruch 1, bei der die zentrale teller- oder scheibenförmige Region eine Schale (88) umfasst.

3. Fluiddosiervorrichtung nach Anspruch 2, bei der in der Schale (88) Bohrungen (100) bereitgestellt sind, um im Gebrauch Fluid durch die Bohrungen (100) aus der Schale (88) austreten zu lassen.

4. Fluiddosiervorrichtung nach einem der vorhergehenden Ansprüche, bei der die Turbine (66) mehrere radiale Schaufeln (90) umfasst.

5. Fluiddosiervorrichtung nach Anspruch 4, bei der die Schaufeln (90) so ausgeführt sind, dass sie das Fluid im Gebrauch beschleunigen.

6. Fluiddosiervorrichtung nach einem der vorhergehenden Ansprüche, wobei die Vorrichtung ferner eine mit der Turbine (66) assoziierte Spindel (68; 108; 128) umfasst.

7. Fluiddosiervorrichtung nach Anspruch 6, bei der die Spindel (68; 128) im Wesentlichen zylindrisch ist.

8. Fluiddosiervorrichtung nach Anspruch 6, bei der die Spindel (108) einen kegelförmigen Abschnitt (106) aufweist.

9. Fluiddosiervorrichtung nach einem der Ansprüche 6 bis 8, bei der die Spindel (68; 108; 128) eine Platte (76; 132) umfasst und die Turbine (66) an der Platte (76; 132) angebracht ist.

10. Fluiddosiervorrichtung nach einem der Ansprüche 6 bis 9, bei der in der Spindel (76) Kanäle bereitgestellt sind, wobei die Kanäle für das Hindurchströmen von Fluid im Gebrauch ausgelegt sind.

11. Fluiddosiervorrichtung nach einem der Ansprüche 6 bis 10, bei der die Düse (60) eine Lagerbohrung (62; 104) aufweist, in der wenigstens ein Teil der Spindel (68; 128) getragen wird.

12. Fluiddosiervorrichtung nach einem der Ansprüche 6 bis 10, wobei die Vorrichtung ferner ein Lagergehäuse (130) umfasst, wobei das Lagergehäuse (130) Lager (134) enthält, in denen wenigstens ein Teil der Spindel (128) getragen wird.

13. Fluiddosiervorrichtung nach Anspruch 11 oder Anspruch 12, wobei die Vorrichtung ferner eine Kühlvorrichtung zum Kühlen der Spindel (68; 108; 128) im Gebrauch umfasst.

14. Fluiddosiervorrichtung nach Anspruch 13, bei der die Kühlvorrichtung eine Kammer (136) zum Aufnehmen von Kühlfluid zum Kühlen der Spindel (128) umfasst.

15. Fluiddosiervorrichtung nach Anspruch 13 oder Anspruch 14, bei der die Kühlvorrichtung einen Strom von auszugebendem Fluid umfasst.

16. Fluiddosiervorrichtung nach einem der Ansprüche 6 bis 15, bei der die Spindel (68) eine ringförmige Nut (78) zum Definieren einer ringförmigen Kammer (80) zwischen der Düse (60) und der Spindel (68) trägt, in welche vor dem Austreiben des Fluids in Richtung auf die Turbine (66) Fluid gefördert wird.

17. Fluiddosiervorrichtung nach einem der vorhergehenden Ansprüche, wobei die Vorrichtung ferner eine Dichtfläche (94; 104) der Düse (60) und eine Haltefeder (86; 114), die zum Schließen der Dichtfläche (94; 104) der Düse (60) fungiert, um das Austreiben von Fluid aus der Düse (60) zu verhindern, umfasst.

18. Fluiddosiervorrichtung nach Anspruch 17, bei der die Vorrichtung ferner eine mit der Turbine (66) assoziierte Dichtfläche umfasst, wobei die Haltefeder (86; 114) zum Vorspannen der mit der Turbine (66) assoziierten Dichtfläche gegen die Dichtfläche (94; 104) der Düse (60) fungiert.

19. Fluiddosiervorrichtung nach Anspruch 18, die so angeordnet ist, dass im Gebrauch Fluid in der Düse (60) eine der Vorspannung der Haltefeder (86; 114) entgegengesetzte Kraft bereitstellt, um die mit der Turbine (66) assoziierte Dichtfläche von der Dichtfläche (94; 104) der Düse (60) weg zu bewegen, wenn der Druck des Fluids in der Düse (60) einen Schwellendruck übersteigt.

20. Fluiddosiervorrichtung nach Anspruch 18 oder Anspruch 19, bei der die mit der Turbine (66) assoziierte Dichtfläche eine Oberfläche der Turbine (66) ist.

21. Fluiddosiervorrichtung nach einem der Ansprüche 17 bis 20, bei der die Haltefeder (114) außerhalb der Düse (60) angeordnet ist.

22. Fluiddosiervorrichtung nach Anspruch 21, wobei die Vorrichtung ferner einen mit der Turbine (66) assoziierten Stift (110) umfasst, wobei die Haltefeder (114) auf den Stift (110) drückt.

23. Fluiddosiervorrichtung nach einem der Ansprüche 17 bis 22, bei der die Haltefeder (86) eine Druckfeder ist.

24. Fluiddosiervorrichtung nach einem der vorhergehenden Ansprüche, wobei die Vorrichtung ferner ein Zuleitungsrohr (22) zum Versorgen der Düse (60) mit Fluid umfasst.

25. Fluiddosiervorrichtung nach Anspruch 24, bei der das Zuleitungsrohr (22) eine für die Beförderung des Fluids angeordnete Röhre (48) und einen Mantel (52), der zwischen der Röhre (48) und dem Mantel (52) einen Raum (54) definiert, umfasst.

26. Fluiddosiervorrichtung nach einem der vorhergehenden Ansprüche, bei der das Fluid ein flüssiges Reagens für selektive katalytische Reduktion ist.

27. Abgasanlage zum Leiten von Abgasen aus einer Verbrennungsmaschine, umfassend eine Fluiddosiervorrichtung nach einem der vorhergehenden Ansprüche.

## Revendications

1. Dispositif de dosage de fluide pour distribuer un fluide dans un flux de gaz, le dispositif comprenant une tuyère (60) agencée pour éjecter un fluide vers une turbine (66), dans lequel la turbine (66) comprend une région centrale en forme de plateau ou de disque agencée pour recevoir un fluide depuis la tuyère (60) et est mise en rotation en réponse aux flux de gaz pour provoquer une accélération du fluide, en utilisation.

2. Dispositif de dosage de fluide selon la revendication 1, dans lequel la région centrale en forme de plateau ou de disque comprend une coupelle (88).

3. Dispositif de dosage de fluide selon la revendication 2, dans lequel des perçages (100) sont prévus dans la coupelle (88) pour permettre au fluide de sortir de la coupelle (88) via les perçages (100), en utilisation.

4. Dispositif de dosage de fluide selon l'une quelconque des revendications précédentes, dans lequel la turbine (66) comprend une pluralité d'aubes radiales (90).

5. Dispositif de dosage de fluide selon la revendication 4, dans lequel les aubes (90) sont adaptées pour accélérer le fluide, en utilisation.

6. Dispositif de dosage de fluide selon l'une quelconque des revendications précédentes, dans lequel le dispositif comprend encore une broche (68 ; 108 ; 128) associée avec la turbine (66).

7. Dispositif de dosage de fluide selon la revendication 6, dans lequel la broche (68 ; 128) est sensiblement cylindrique.

8. Dispositif de dosage de fluide selon la revendication 6, dans lequel la broche (108) comprend une portion effilée (106).

9. Dispositif de dosage de fluide selon l'une quelconque des revendications 6 à 8, dans lequel la broche (68 ; 108 ; 128) comprend une plaque (76 ; 132) et la turbine (66) est attachée à la plaque (76 ; 132).

10. Dispositif de dosage de fluide selon l'une quelconque des revendications 6 à 9, dans lequel des canaux sont prévus dans la broche (76), les canaux étant adaptés pour le passage du fluide, en utilisation.

11. Dispositif de dosage de fluide selon l'une quelconque des revendications 6 a 10, dans lequel la tuyère (60) inclut un perçage en palier (62 ; 104) dans lequel au moins une partie de la broche (68 ; 108) est portée.

12. Dispositif de dosage de fluide selon l'une quelconque des revendications 6 à 10, dans lequel le dispositif comprend en outre un boîtier de palier (130), le boîtier de palier (130) contenant des paliers (134) dans lesquels au moins une partie de la broche (128) est portée.

13. Dispositif de dosage de fluide selon la revendication 11 ou 12, dans lequel le dispositif comprend en outre des moyens de refroidissement pour refroidir la broche (68 ; 108 ; 128), en utilisation.

14. Dispositif de dosage de fluide selon la revendication 13, dans lequel les moyens de refroidissement comprennent une chambre (136) pour contenir un fluide de refroidissement destiné à refroidir la broche (128).

15. Dispositif de dosage de fluide selon la revendication 13 ou 14, dans lequel les moyens de refroidissement comprennent un flux de fluide à distribuer.

16. Dispositif de dosage de fluide selon l'une quelconque des revendications 6 à 15, dans lequel la broche (68) porte une gorge annulaire (78) pour définir une chambre annulaire (80) entre la tuyère (60) et la broche (68), dans laquelle du fluide est fourni avant l'expulsion du fluide vers la turbine (66).

17. Dispositif de dosage de fluide selon l'une quelconque des revendications précédentes, dans lequel le dispositif comprend en outre une surface d'étanchement (94 ; 104) de la tuyère (60) et un ressort de retenue (86 ; 114) qui agit pour fermer la surface d'étanchement (94 ; 104) de la tuyère (60), de manière à empêcher l'expulsion de fluide hors de la tuyère (60).

18. Dispositif de dosage de fluide selon la revendication 17, dans lequel le dispositif comprend en outre une surface d'étanchement associée à la turbine (66), dans lequel le ressort de retenue (86 ; 114) agit pour solliciter la surface d'étanchement associée à la turbine (66) contre la surface d'étanchement (94 ; 104) de la tuyère (60).

19. Dispositif de dosage de fluide selon la revendication 18, agencé de telle façon que, en utilisation, le fluide à l'intérieur de la tuyère (60) fournit une force opposée à la sollicitation du ressort de retenue (86 ; 114) pour déplacer la surface d'étanchement associée à la turbine (66) en éloignement de la surface d'étanchement (94 ; 104) de la tuyère (60) quand la pression du fluide à l'intérieur de la tuyère (60) excède une pression seuil.

20. Dispositif de dosage de fluide selon la revendication 18 ou 19, dans lequel la surface d'étanchement associée à la turbine (66) est une surface de la turbine (66).

21. Dispositif de dosage de fluide selon l'une quelconque des revendications 17 à 20, dans lequel le ressort de retenue (114) est disposé à l'extérieur de la tuyère (60).

22. Dispositif de dosage de fluide selon la revendication 21, dans lequel le dispositif comprend en outre une tige (110) associée à la turbine (66), et dans lequel le ressort de retenue (114) porte contre la tige (110).

23. Dispositif de dosage de fluide selon l'une quelconque des revendications 17 à 22, dans lequel le ressort de retenue (86) est un ressort de compression.

24. Dispositif de dosage de fluide selon l'une quelconque des revendications précédentes, dans lequel le dispositif comprend encore un tube d'alimentation (22) agencé pour fournir du fluide à la tuyère (60).

25. Dispositif de dosage de fluide selon la revendication 24, dans lequel le tube d'alimentation (22) comprend un tube (48) agencé pour transporter le fluide et une chemise (52) définissant un compartiment (54) entre le tube (48) et la chemise (52).

26. Dispositif de dosage de fluide selon l'une quelconque des revendications précédentes, dans lequel le fluide est un réactif liquide pour réduction catalytique sélective.

27. Système d'échappement pour transporter des gaz d'échappement depuis un moteur à combustion interne, comprenant un dispositif de dosage de fluide selon l'une quelconque des revendications précédentes.
